# EUROPEAN PATENT APPLICATION

(11) **EP 3 239 590 A1**
(43) Date of publication of application: **01.11.2017**
(21) Application number: 15871982.3
(22) Date of filing: 25.12.2015
(51) Int. Cl.: F17C 5/00, F17C 13/00

(54) **STATION CONTROL SYSTEM AND METHOD FOR UNATTENDED LNG GAS STATION**

(30) Priority: 25.12.2014 CN 201410820529
(71) Applicant: Chengdu Huaqi Houpu Holding Co., Ltd., Gaoxin District Chengdu Sichuan 610094 (CN)
(72) Inventor: JIANG, Tao, Chengdu Sichuan 610041 (CN); CHEN, Fuyun, Chengdu Sichuan 610041 (CN); HUANG, Ji, Chengdu Sichuan 610041 (CN); CHEN, Hao, Chengdu Sichuan 610041 (CN); LI, Qiang, Chengdu Sichuan 610041 (CN); TANG, Xiaozong, Chengdu Sichuan 610041 (CN); YU, Bo, Chengdu Sichuan 610041 (CN); CHEN, Yi, Chengdu Sichuan 610041 (CN); LIANG, Huoxiu, Chengdu Sichuan 610041 (CN); HUANG, Jun, Chengdu Sichuan 610041 (CN)
(74) Representative: Rupprecht, Kay
(86) International application number: PCT/CN2015/098932
(87) International publication number: WO 2016/101914

(57) **Abstract**

A station control system and method for an unattended LNG gas station. The station control system comprises: a network switch, a display screen, an input terminal, a camera, a short message sending module, a user identification apparatus, a memory, a computer, and a controller. The display screen, the input terminal, the camera, the short message sending module, the memory, the computer, and the controller all have a signal connection to the network switch, the user identification apparatus has a signal connection to the controller, the controller further has a signal connection to meters and pipeline valves in the station, and the like. The system can save a labor cost.

## Description

### Technical Field

The present invention relates to the LNG field, and particularly to a station control system and method for an unattended LNG gas station (i.e. an unattended LNG filling station).

### Background Art

LNG is the abbreviation of Liquefied Natural Gas. Natural gas, after having undergone purification treatment (to remove impurities such as CO₂, sulfides, hydrocarbons, and water), is deep-cooled to -162 ºC at atmospheric pressure, and is changed from a gaseous state to a liquid state, called liquefied natural gas. Volume of the liquefied natural gas is 1/625 of that of natural gas of the same weight in the gaseous state, and weight thereof is about 45% of that of water of the same volume.

As a clean energy source, LNG is widely used in various fields, and when automobiles, vessels and like fields are involved, they need to be filled with LNG. At present, a lot of LNG filling stations are provided in the whole country for filling automobiles using LNG as power, but all of them substantially require working staff to fill (or fuel) the automobiles in the stations. Actually, main work in the filling stations is divided into fueling, unloading, pressure adjusting and temperature adjusting. Such work has standard processes, and absolutely can be automatically operated. However, at present, there is no automatic control technology for LNG filling stations in our country, and the operation of the filling stations still relies on manual labor.

### Disclosure of the Invention

The technical problem to be solved by the present invention is, in regard to the existing problems above, to provide a station control system and method for an unattended LNG filling station, so as to save the labor cost.

The station control system for an unattended LNG filling station provided in the present invention includes:
A network switch, a display screen, an input terminal, cameras, a short message sending module, a user identity identification apparatus, a memory, a computer and a controller.

In the above, the display screen, the input terminal, the cameras, the short message sending module, the memory, the computer and the controller all are in signal connection with the network switch.

The user identity identification apparatus is in signal connection with the controller.

The controller further is in signal connection with meters and pipeline valves in the station

The present invention further provides a station control method for an unattended LNG filling station, characterized in that when LNG filling is performed, it is realized through the following steps:
Step a1: identifying a user identity by the user identity identification apparatus, and entering a fueling process after the identification is successful;
Step a2: checking whether a liquid level in a liquid storage tank in the station is higher than a lowest level, and if yes, providing to the user a prompt that the fueling is available and performing step a3, otherwise, providing at the display screen to the user a prompt that the liquid level is low and exiting the fueling process;
Step a3: checking whether a temperature of an immersed pump is lower than a set value, and if yes, performing Step a4, and repeating Step a3;
Step a4: checking whether a fueling button is triggered, and if yes, switching on a filling pipeline valve and controlling the immersed pump to perform fueling; meanwhile checking whether a failure occurs to the immersed pump, and if yes, switching off the filling pipeline valve and controlling the immersed pump to stop the fueling, otherwise, performing Step a5; and Step a5: checking whether a condition of stopping the fueling is triggered, and if yes, switching off the filling pipeline valve and controlling the immersed pump to stop the fueling.

Further, in the filling process, Step a4 includes checking whether the fueling button is triggered, and if yes, switching on the filling pipeline valve; and judging whether a pump controlling manner chosen by the user is constant-pressure control, and if yes, controlling the immersed pump to perform fueling at a set liquid output pressure, otherwise, controlling the immersed pump to perform fueling at a set rotating speed.

Further, in the filling process, checking whether a condition of stopping the fueling is triggered in Step a5 is performed by checking whether a fueling stop button is triggered, or checking whether a fueling amount reaches a user set value.

When unloading from a tanker truck is performed, it is realized through the following steps:
Step b1: checking whether an unloading button is pressed down, and if yes, identifying a user identity by the user identity identification apparatus, and entering an unloading process after the identification is successful;
Step b2: prompting the user to choose an unloading manner and receiving the unloading manner chosen by the user;
Step b3: switching on an unloading inlet valve;
Step b4: balancing pressures in a liquid storage tank of the tanker truck and a liquid storage tank in the station;
Step b5: pressurizing the liquid storage tank of the tanker truck;
Step b6: checking whether the temperature of the immersed pump is lower than a set value, and if yes, performing Step b7, otherwise, repeating Step b6;
Step b7: starting the unloading, and monitoring a liquid level in the liquid storage tank in the station, and if the liquid level is higher than an upper limit (i.e. a first upper limit) of the liquid level, providing to the user a prompt that the unloading is completed; and
Step b8: checking whether the user presses down the unloading stop button, and if yes, stopping the unloading, otherwise, monitoring whether the liquid level in the liquid storage tank in the station is higher than a higher upper limit (i.e. a second upper limit) of the liquid level, and if yes, stopping the unloading, otherwise repeating Step b8.

In the unloading process, the unloading manner in Step b2 includes a pump skid unloading manner, a self-pressurized unloading manner or a tanker truck pump unloading manner.

When automatic pressure adjustment of the liquid storage tank in the station is performed, it is realized through the following steps:
Step c1: checking whether standby time of the system is greater than a preset period of time, wherein if yes, it is checked whether the pressure in the liquid storage tank is lower than a set minimum value, wherein, if lower, working staff in the station is inquired through the computer whether pressurization is needed, wherein if the working staff in the station confirm that the pressurization is needed through the computer, a pressurization valve is switched on to perform pressurization; and
Step c2: monitoring whether the pressure in the liquid storage tank reaches a predetermined value and whether the pressurization is timed out, wherein if the pressure in the liquid storage tank reaches the predetermined value or the pressurization is timed out, the pressurization is stopped by switching off the pressurization valve; and if the pressure in the liquid storage tank does not reach the predetermined value and the pressurization is not timed out, Step c2 is repeated.

When automatic temperature adjustment of the liquid storage tank in the station is performed, it is realized through the following steps:
Step d1: checking whether the system standby time is greater than a preset period of time, wherein if yes, it is checked whether a temperature in the liquid storage tank is lower than a set minimum value, wherein if yes, the working staff in the station is inquired through the computer whether heating is needed, wherein a heating valve is switched on and the immersed pump is switched on to perform heating, if the working staff in the station confirm that the heating is needed through the computer;
Step d2: monitoring whether a failure occurs to the immersed pump, wherein if no failure occurs, Step d3 is performed, otherwise, the heating is stopped by switching off the heating valve and the immersed pump; and
Step d3: monitoring whether the temperature in the liquid storage tank reaches a predetermined value and whether the heating is timed out, wherein if the temperature in the liquid storage tank reaches the predetermined value or the heating is timed out, the heating is stopped by switching off the heating valve and the immersed pump; and if the temperature in the liquid storage tank does not reach the predetermined value and the heating is not timed out, Step d3 is repeated.

When solving a failure, the controller collects parameters uploaded by respective meters in the station, and compares the parameters with their predetermined values respectively, and when the parameters uploaded by the meters are deviated from normal predetermined values, the controller gives a corresponding alarm prompt.

In the above, a mode for the alarm prompt is divided into two types, wherein one is used to prompt for general warning events, and comprises steps of enabling a first type of alarm light to flicker and performing a corresponding protective action; the other is used to prompt for significant warning events, and comprises steps of sending, by the controller, the prompted significant alarm event to the short message module through the network switch, sending the significant alarm event to a cellphone of management staff by the short message module, and simultaneously cutting off power supply, stopping the immersed pump and switching off all pipeline valves.

To sum up, as the above technical solutions are used, the present invention has the following beneficial effects:
The present invention realizes the unattended operation of the filling station. When a driver comes to the station for fueling, firstly, the identity of the driver is identified, and after the identification, self-serve fueling can be realized, which process automatically ensures the filling procedures and safety.

When unloading is needed, the unloading must be operated by a user with corresponding permission after passing verification. After the operating permission is obtained, an unloading management pneumatic valve can be switched on, and the system automatically detects an unloading flowmeter temperature, pump temperature and so on. After preparations such as pre-cooling are completed, the driver will be prompted with an indicator light that the unloading can be started. The station control system will monitor the whole unloading process, and will prompt the drive with an alarm when finding something abnormal. When the liquid level in the storage tank reaches the predetermined value (95% of a upper limit of the storage tank), the driver will be prompted to stop unloading, when a higher upper limit of the storage tank is reached, the unloading valves and so on will be forcibly closed, so as to automatically exit the unloading operation process, ensuring normal execution and safety of the unloading process.

The present invention further realizes real-time monitoring of the pressure and the temperature in the LNG storage tank, and automatically realizes pressurization and heating when the pressure and the temperature are lower than certain values.

The present invention further realizes that when the station control system for an unattended LNG filling station is in an operating state, data of various instruments and meters in the whole station are monitored in real time, and according to calculations such as comparison between the real-time values and the system predetermined values, when the real-time values deviate from the normal values, the PLC controller makes corresponding alarm prompt, grades the alarm information, and chooses different coping strategies for alarm information of different grades, ensuring the safety of the unattended filling station while improving the efficiency of handling warning instances.

### Brief Description of Drawings

The present invention will be illustrated with examples in reference to the figures.
Fig. 1 is a structural block diagram of a station control system for an unattended LNG filling station of the present invention.
Fig. 2 is a flow chart showing automatic fueling control in a station control method of the present invention.
Fig. 3 is a flow chart showing automatic unloading control in a station control method of the present invention.
Fig. 4 is a flow chart showing automatic pressure-adjusting and temperature-adjusting control in a station control method of the present invention.
Fig. 5 shows examples of alarm information and coping strategies in a station control method of the present invention.
Fig. 6 is a schematic diagram showing PID control of constant-pressure fueling in a station control method of the present invention.

### Detailed Description of Embodiments

All features or steps in all methods or processes disclosed in the present description can be combined in any way except mutually exclusive features and/or steps.

Any feature disclosed in the present description, unless particularly stated, can be replaced by other equivalent or substitute feature with similar object. That is, unless particularly stated, each feature is merely one example of a series of equivalent or similar features.

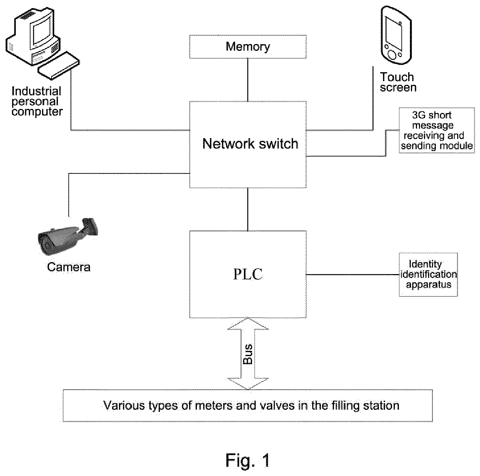

As in Fig. 1, a station control system for an unattended LNG filling station provided in the present invention includes:
a network switch, a display screen, an input terminal, cameras, a short message sending module, a user identity identification apparatus, a memory, a computer and a controller.

In the above, the display screen, the input terminal, the cameras, the short message sending module, the memory, the computer and the controller all are in signal connection with the network switch.

The user identity identification apparatus is in signal connection with the controller.

The controller further is in signal connection with meters and pipeline valves in the station.

In one specific example, the display screen and the input terminal are embodied as a touch screen, the controller is embodied as a PLC, and the user identity identification apparatus is embodied as an RFID swipe card reader.

The cameras are distributed in areas of the filling station that need to be monitored, for example, important areas such as a filling area, an unloading area and so on, and video information collected by the cameras is transmitted by the network switch to the computer and the memory located in a monitoring room, so that the working staff can observe the situation of the gas station in the monitoring room.

The touch screen is used to input user's instruction and output prompt information, alarm information and the like to the user. The user's instruction is transmitted to the controller through the network switch, and the controller controls field meters and valves to perform corresponding actions. The controller is further used to receive state information output by the field meters, and outputs the state information to the computer and/or the touch screen through the network switch.

The controller is further used to output the alarm information to the touch screen and/or the short message sending module through the network switch, and the short message sending module is used to send the alarm information in a short message form to the cell phone of designated staff.

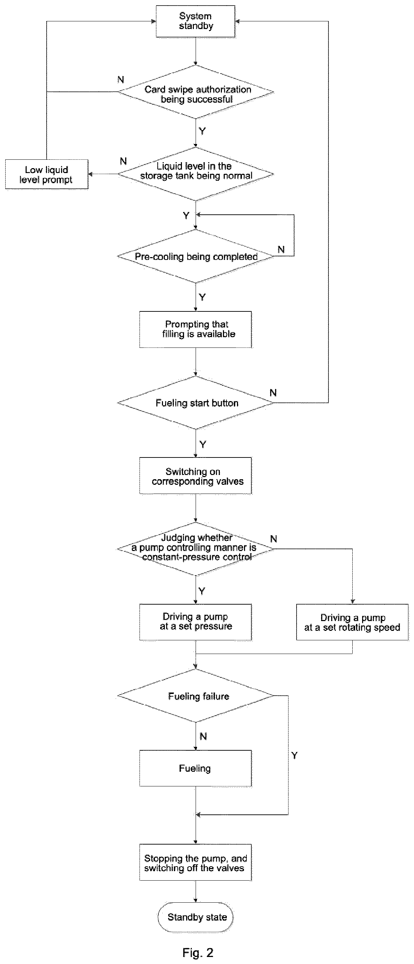

On the basis of the above contents, the present invention further provides a station control method for an unattended LNG filling station, and as in Fig. 2, when the filling is performed, it is realized through the following steps:
Step a1: identifying a user identity by the user identity identification apparatus, and entering a fueling process after the identification is successful;
Step a2: checking whether a liquid level in a liquid storage tank in the station is higher than a lowest level, and If yes, providing to the user a prompt that the fueling is available and performing step a3, otherwise, providing at the display screen to the user a prompt that the liquid level is low and exiting the fueling process;
Step a3: checking whether a temperature of an immersed pump is lower than a set value, and if yes, performing Step a4, and repeating Step a3;
Step a4: checking whether a fueling button is triggered, and if yes, switching on a filling pipeline valve and controlling the immersed pump to perform fueling; meanwhile checking whether a failure occurs to the immersed pump, and if yes, switching off the filling pipeline valve and controlling the immersed pump to stop the fueling, otherwise, performing Step a5; and
Step a5: checking whether a condition of stopping the fueling is triggered, and if yes, switching off the filling pipeline valve and controlling the immersed pump to stop the fueling.

In the above, Step a4 includes checking whether the fueling button is triggered, and if yes, switching on the filling pipeline valve; and judging whether a pump controlling manner chosen by the user is constant-pressure control, and if yes, controlling the immersed pump to perform fueling at a set liquid output pressure, otherwise, controlling the immersed pump to perform fueling at a set rotating speed.

Checking whether a condition of stopping the fueling is triggered in Step a5 is performed by checking whether a fueling stop button is triggered, or checking whether a fueling amount reaches a user set value.

It is considered that the constant-pressure controlling manner of fueling has the following problems: due to physical properties of the LNG, the immersed pump is prone to phenomena such as cavitation, evacuation, and discontinuous feeding, and due to these reasons, conventional PID algorithm of the constant-pressure control will cause problems such as large pressure fluctuation, obvious overshooting, and vibration, etc., so that the fueling process is unstable.

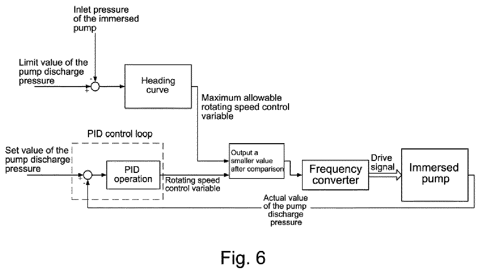

Thus, the present invention further provides an improved constant-pressure PID control flow for the immersed pump, as in Fig. 6: collecting an actual value of a pump discharge pressure of the immersed pump, i.e. a pressure at an outlet of the immersed pump; taking the actual value of the pump discharge pressure and a set value of the pump discharge pressure as two input variables of a PID control loop, and an output variable of the PID control loop as a control variable of the rotating speed of the immersed pump.

It is judged whether the actual value of the pump discharge pressure is greater than the set value of the pump discharge pressure, and if it is less, a×P is used as a gain of the PID control loop, and if it is greater, bxP is used as a gain of the PID control loop, wherein 0<a<b, and P indicates a standard gain of the PID control loop.

In one preferred example, a is 1, and b is 2. Such practice comprises using different gains in a vibration stage of the PID control. When the actual value of the pump discharge pressure is less than the set value, a relatively small gain is used to slowly increase the actual value of the pump discharge pressure, and when the actual value of the pump discharge pressure exceeds the set value, a relatively large gain is used to decrease the actual value of the pump discharge pressure quickly, forming the effect of accelerated undershooting so as to reduce occurrence of overshooting.

The following step is further included: judging whether an absolute value of a difference between the actual value of the pump discharge pressure and the set value of the pump discharge pressure is less than a set threshold, for example, the set threshold being 1% of the set value, and if it is less, a difference value of the PID control loop is set as 0. Such design idea is that when the difference between the actual value of the pump discharge pressure and the set value is less than a certain value, we consider that the actual value has reached the set value, and the output of a PID control pipe is constant, so that the pump discharge pressure quickly achieves a stable state.

During the fueling process, for the reasons of low liquid level and insufficient pressure head, the liquid supply of the immersed pump cannot keep pace with the pump output flow, and the pump output pressure will decrease, lower than the set value of the pump discharge pressure, but not reaching a stop value, at this time, the conventional PID will automatically increase the output value, and control the pump to pump LNG faster, but in fact, the pressure cannot rise since no liquid is supplied, finally, the vicious circle makes the rotating speed of the pump very high, at which time, if the cutoff liquid suddenly is recovered to flow, the output pressure of the pump will be suddenly superhigh, and may exceed an alarm value and a safety valve bounces in serious cases. In order to avoid this phenomenon, the present constant-pressure PID control flow additionally comprises the following steps:
collecting an inlet pressure of the immersed pump; subtracting the inlet pressure from a limit value of the pump discharge pressure to obtain a current allowable boost pressure of the pump, then converting the allowable boost pressure to a maximum allowable rotating speed control variable of the current pump according to a heading curve of the immersed pump. The heading curve is a curve exhibiting the relationship between the pump discharge pressure and the rotating speed of each immersed pump. After the immersed pump is manufactured, its heading curve is uniquely determined. The heading curve can be provided by an immersed pump manufacturer, and a more accurate rotating speed heading curve also can be obtained through actual test after the process system is set up. Through this curve, we can obtain the maximum allowable rotating speed control variable through the allowable boost pressure.

The rotating speed control variable of the immersed pump output by the PID control loop is compared with the maximum allowable rotating speed control variable of the current pump, and if it is less, the rotating speed control variable of the immersed pump output by the PID control loop is taken as a rotating speed final control variable of the immersed pump, if it is greater, the maximum allowable rotating speed control variable of the current pump is taken as the rotating speed final control variable of the immersed pump; and the rotating speed final control variable of the immersed pump is used to control the rotating speed of the immersed pump.

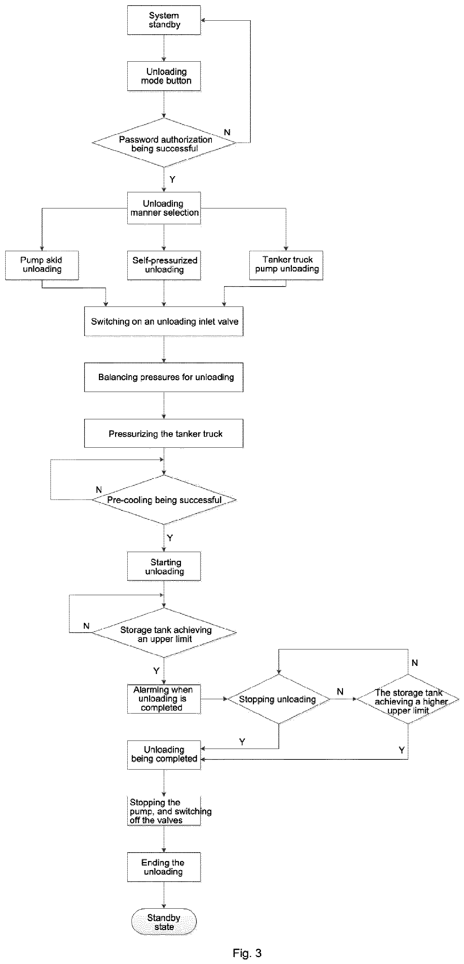

As in Fig. 3, when unloading from a tanker truck is performed, it is realized through the following steps:
Step b1: checking whether an unloading button is pressed down, and if yes, identifying a user identity by the user identity identification apparatus, and entering an unloading process after the identification is successful;
Step b2: prompting the user to choose an unloading manner and receiving the unloading manner chosen by the user;
Step b3: switching on an unloading inlet valve;
Step b4: balancing pressures in a liquid storage tank of the tanker truck and a liquid storage tank in the station;
Step b5: pressurizing the liquid storage tank of the tanker truck;
Step b6: checking whether the temperature of the immersed pump is lower than a set value, and if yes, performing Step b7, otherwise, repeating Step b6;
Step b7: starting the unloading, and monitoring a liquid level in the liquid storage tank in the station, and if the liquid level is higher than an upper limit of the liquid level, providing to the user a prompt that the unloading is completed; and
Step b8: checking whether the user presses down the unloading stop button, and if yes, stopping the unloading, otherwise, monitoring whether the liquid level in the liquid storage tank in the station is higher than a higher upper limit of the liquid level, and if yes, stopping the unloading, otherwise repeating Step b7.

In the unloading process, the unloading manner described in Step b2 includes a pump skid unloading manner, a self-pressurized unloading manner or a tanker truck pump unloading manner.

LNG is different from water. In the physical form, water is in a super-cooled state, while LNG in the storage tank generally is in a saturated state, therefore, the LNG immersed pump, in operation, has relatively high requirements to the net positive pressure head, the actual operation of the station is usually realized by elevating the position of the liquid in the storage tank and increase the pressure of the storage tank, and the station control system will monitor the temperature and the pressure of the LNG in the storage tank in real time, and automatically recognizes its current state according to an LNG saturation curve table. When it is found that the liquid state is in the saturation area, and the pressure of the storage tank is insufficient, the system will automatically place a liquid return valve at an upper liquid inlet position, otherwise, at a lower liquid inlet position. The pressure of the storage tank is adjusted through BOG gas generated by pipeline gasification. If the pressure is too low, the system will further switch on a pressurization valve, and increase the pressure of the storage tank via a vaporizer, so as to achieve the object of elevating the pump net positive pressure head and ensuring the normal operation of the pump.

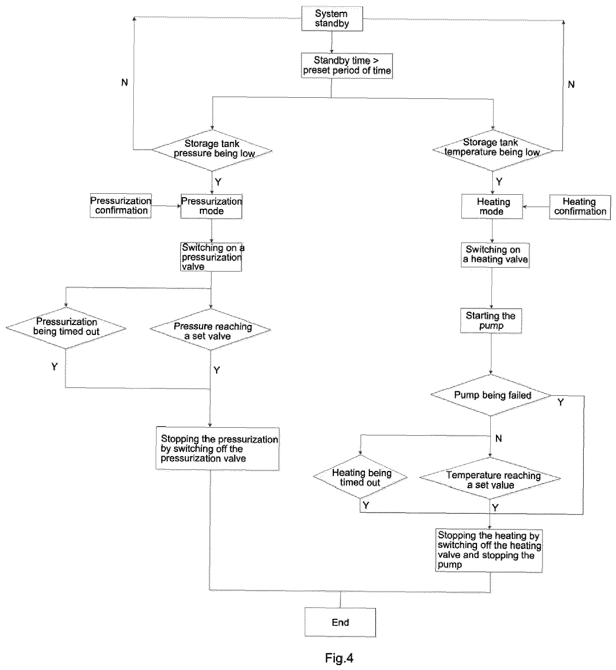

As in Fig. 4, when automatic pressure adjustment of the liquid storage tank in the station is performed, it is realized through the following steps:
Step c1: checking whether standby time of the system is greater than a preset period of time, wherein if yes, it is checked whether the pressure in the liquid storage tank is lower than a set minimum value, wherein, if lower, working staff in the station is inquired through the computer whether pressurization is needed, wherein if the working staff in the station confirm that the pressurization is needed through the computer, a pressurization valve is switched on to perform pressurization; and
Step c2: monitoring whether the pressure in the liquid storage tank reaches a predetermined value and whether the pressurization is timed out, wherein if the pressure in the liquid storage tank reaches the predetermined value or the pressurization is timed out, the pressurization is stopped by switching off the pressurization valve; and if the pressure in the liquid storage tank does not reach the predetermined value and the pressurization is not timed out, Step c2 is repeated; and if the pressure in the liquid storage tank does not reach the predetermined value and the pressurization is not timed out, Step c2 is repeated.

When the automatic temperature adjustment of the liquid storage tank in the station is performed, it is realized through the following steps:
Step d1: checking whether the system standby time is greater than a preset period of time, wherein if yes, it is checked whether a temperature in the liquid storage tank is lower than a set minimum value, wherein if yes, the working staff in the station is inquired through the computer whether heating is needed, wherein a heating valve is switched on and the immersed pump is switched on to perform heating, if the working staff in the station confirm that the heating is needed through the computer;
Step d2: monitoring whether a failure occurs to the immersed pump, wherein if no failure occurs, Step d3 is performed, otherwise, the heating is stopped by switching off the heating valve and the immersed pump; and
Step d3: monitoring whether the temperature in the liquid storage tank reaches a predetermined value and whether the heating is timed out, wherein if the temperature in the liquid storage tank reaches the predetermined value or the heating is timed out, the heating is stopped by switching off the heating valve and the immersed pump; and if the temperature in the liquid storage tank does not reach the predetermined value and the heating is not timed out, Step d3 is repeated.

When solving a failure, the controller collects parameters uploaded by respective meters in the station, and compares the parameters with their predetermined values respectively, and when the parameters uploaded by the meters are deviated from normal predetermined values, the controller gives a corresponding alarm prompt.

In the above, a mode for the alarm prompt is divided into two types, wherein one is used to prompt for general warning events, and comprises steps of enabling a first type of alarm light to flicker and performing a corresponding protective action; the other is used to prompt for significant warning events, and comprises steps of sending, by the controller, the prompted significant alarm event to the short message module through the network switch, sending the significant alarm event to a cellphone of management staff by the short message module, and simultaneously cutting off power supply, stopping the immersed pump and switching off all pipeline valves.

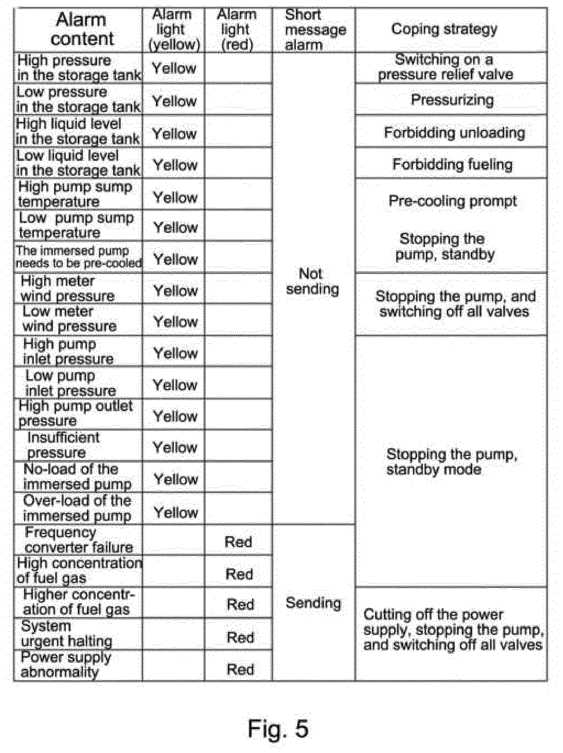

Fig. 5 shows warning instances that may occur to the filling station and their coping strategies.

The present invention is not limited to the foregoing embodiments. The present invention can be extended to any new features or any new combination disclosed in the present description, and steps of any new method or process disclosed or any new combinations.

## Claims

1. A station control system for an unattended liquefied natural gas (LNG) filling station, **characterized by** comprising:
a network switch, a display screen, an input terminal, cameras, a short message sending module, a user identity identification apparatus, a memory, a computer and a controller,
wherein the display screen, the input terminal, the cameras, the short message sending module, the memory, the computer and the controller all are in signal connection with the network switch;
the user identity identification apparatus is in signal connection with the controller; and
the controller further is in signal connection with meters and pipeline valves in the station.

2. A station control method based on the station control system for an unattended liquefied natural gas filling station of claim 1, **characterized in that** when liquefied natural gas filling is performed, the method is realized through following steps:
Step a1: identifying a user identity by the user identity identification apparatus, and entering a fueling process after the identification is successful;
Step a2: checking whether a liquid level in a liquid storage tank in the station is higher than a lowest level, and if yes, providing to the user a prompt that the fueling is available and performing step a3, otherwise, providing at the display screen to the user a prompt that the liquid level is low, and exiting the fueling process;
Step a3: checking whether a temperature of an immersed pump is lower than a set value, and if yes, performing Step a4, and repeating Step a3;
Step a4: checking whether a fueling button is triggered, and if yes, switching on a filling pipeline valve and controlling the immersed pump to perform fueling; meanwhile checking whether a failure occurs to the immersed pump, and if yes, switching off the filling pipeline valve and controlling the immersed pump to stop the fueling, otherwise, performing Step a5; and
Step a5: checking whether a condition of stopping the fueling is triggered, and if yes, switching off the filling pipeline valve and controlling the immersed pump to stop the fueling.

3. The station control method of claim 2, **characterized in that** in a process of the filling, Step a4 comprises: checking whether the fueling button is triggered, and if yes, switching on the filling pipeline valve; and judging whether a pump controlling manner chosen by the user is constant-pressure control, and if yes, controlling the immersed pump to perform fueling at a set liquid output pressure, otherwise, controlling the immersed pump to perform fueling at a set rotating speed.

4. The station control method of claim 2, **characterized in that** in the process of the filling, checking whether a condition of stopping the fueling is triggered in Step a5 is performed by checking whether a fueling stop button is triggered, or checking whether a fueling amount reaches a user set value.

5. The station control method of claim 4, **characterized in that** when unloading from a tanker truck is performed, the method is realized through following steps:
Step b1: checking whether an unloading button is pressed down, and if yes, identifying a user identity by the user identity identification apparatus, and entering an unloading process after the identification is successful;
Step b2: prompting the user to choose an unloading manner, and receiving the unloading manner chosen by the user;
Step b3: switching on an unloading inlet valve;
Step b4: balancing pressures in a liquid storage tank of the tanker truck and a liquid storage tank in the station;
Step b5: pressurizing the liquid storage tank of the tanker truck;
Step b6: checking whether the temperature of the immersed pump is lower than a set value, and if yes, performing Step b7, otherwise, repeating Step b6;
Step b7: starting the unloading, and monitoring a liquid level in the liquid storage tank in the station, and if the liquid level is higher than an upper limit of the liquid level, providing to the user a prompt that the unloading is completed; and
Step b8: checking whether the user presses down the unloading stop button, and if yes, stopping the unloading, otherwise, monitoring whether the liquid level in the liquid storage tank in the station is higher than a higher upper limit of the liquid level, and if yes, stopping the unloading, otherwise repeating the Step b8.

6. The station control method of claim 5 **characterized in that** in a process of the unloading, the unloading manner in Step b2 comprises a pump skid unloading manner, a self-pressurized unloading manner or a tanker truck pump unloading manner.

7. The station control method of claim 6, **characterized in that** when automatic pressure adjustment of the liquid storage tank in the station is performed, the method is realized through following steps:
Step c1: checking whether standby time of the system is greater than a preset period of time, wherein if yes, it is checked whether the pressure in the liquid storage tank is lower than a set minimum value, wherein, if lower, working staff in the station is inquired through the computer whether pressurization is needed, wherein if the working staff in the station confirm that the pressurization is needed through the computer, a pressurization valve is switched on to perform pressurization; and
Step c2: monitoring whether the pressure in the liquid storage tank reaches a predetermined value and whether the pressurization is timed out, wherein if the pressure in the liquid storage tank reaches the predetermined value or the pressurization is timed out, the pressurization is stopped by switching off the pressurization valve; and if the pressure in the liquid storage tank does not reach the predetermined value and the pressurization is not timed out, Step c2 is repeated; and if the pressure in the liquid storage tank does not reach the predetermined value and the pressurization is not timed out, Step c2 is repeated.

8. The station control method of claim 7, **characterized in that** when automatic temperature adjustment of the liquid storage tank in the station is performed, the method is realized through following steps:
Step d1: checking whether the system standby time is greater than a preset period of time, wherein if yes, it is checked whether a temperature in the liquid storage tank is lower than a set minimum value, wherein if yes, the working staff in the station is inquired through the computer whether heating is needed, wherein a heating valve is switched on and the immersed pump is switched on to perform heating, if the working staff in the station confirm that the heating is needed through the computer;
Step d2: monitoring whether a failure occurs to the immersed pump, wherein if no failure occurs, Step d3 is performed, otherwise, the heating is stopped by switching off the heating valve and the immersed pump; and
Step d3: monitoring whether the temperature in the liquid storage tank reaches a predetermined value and whether the heating is timed out, wherein if the temperature in the liquid storage tank reaches the predetermined value or the heating is timed out, the heating is stopped by switching off the heating valve and the immersed pump; and if the temperature in the liquid storage tank does not reach the predetermined value and the heating is not timed out, Step d3 is repeated.

9. The station control method of claim 2, **characterized in that** when solving a failure, the controller collects parameters uploaded by respective meters in the station, and compares the parameters with their predetermined values respectively, and when the parameters uploaded by the meters are deviated from normal predetermined values, the controller gives a corresponding alarm prompt,
wherein a mode for the alarm prompt is divided into two types, with one being used to prompt for general warning events and comprising steps of enabling a first type of alarm light to flicker and performing a corresponding protective action; and the other being used to prompt for significant warning events and comprising steps of sending, by the controller, the prompted significant alarm event to the short message module through the network switch, sending the significant alarm event to a cellphone of management staff by the short message module, and simultaneously cutting off power supply, stopping the immersed pump and switching off all pipeline valves.
